(19) **Europäisches Patentamt / European Patent Office / Office européen des brevets**

(11) **EP 4 251 712 B1**

(12) **FASCICULE DE BREVET EUROPEEN**

(45) Date de publication et mention
de la délivrance du brevet:
**07.01.2026 Bulletin 2026/02**

(21) Numéro de dépôt: **21810373.7**

(22) Date de dépôt: **18.11.2021**

(51) Classification Internationale des Brevets (IPC):
*C10G 45/06* (2006.01)    *B01J 27/20* (2006.01)
*B01J 23/24* (2006.01)    *B01J 23/75* (2006.01)

(52) Classification Coopérative des Brevets (CPC):
**C10G 45/06; B01J 21/18; B01J 23/882;
B01J 27/19; B01J 35/615; B01J 35/635;
B01J 35/647; B01J 37/0201; C10G 45/08;**
C10G 2300/104; C10G 2300/1044

(86) Numéro de dépôt international:
**PCT/EP2021/082170**

(87) Numéro de publication internationale:
**WO 2022/112093 (02.06.2022 Gazette 2022/22)**

(54) **PROCEDE D'HYDRODESULFURATION D'UNE COUPE ESSENCE METTANT EN CEUVRE UN CATALYSEUR CONTENANT UN MATERIAU GRAPHITIQUE CARACTERISE PAR SON RAPPORT H/C**

VERFAHREN ZUR HYDROENTSCHWEFELUNG EINER ERDÖLFRAKTION UNTER VERWENDUNG EINES KATALYSATORS MIT EINEM GRAPHITMATERIAL GEKENNZEICHNET DURCH DAS H/C-VERHÄLTNIS DAVON

METHOD FOR HYDRODESULFURISATION OF A PETROLEUM FRACTION USING A CATALYST CONTAINING A GRAPHITIC MATERIAL CHARACTERISED BY THE H/C RATIO THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.11.2020 FR 2012322**

(43) Date de publication de la demande:
**04.10.2023 Bulletin 2023/40**

(73) Titulaire: **IFP Energies nouvelles
92500 Rueil-Malmaison (FR)**

(72) Inventeurs:
• **DEVERS, Elodie
92852 RUEIL-MALMAISON CEDEX (FR)**
• **GIRARD, Etienne
92852 RUEIL-MALMAISON CEDEX (FR)**
• **LEFLAIVE, Philibert
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
EP-A1- 0 745 660    EP-A1- 2 962 753
FR-A1- 3 090 006

## Description

### Domaine de l'invention

La présente invention concerne un procédé d'hydrodésulfuration d'une coupe essence mettant en œuvre un catalyseur contenant un matériau graphitique caractérisé par son rapport H/C.

### État de la technique

Le soufre est un élément naturellement présent dans le pétrole brut et est donc présent dans l'essence et le gazole s'il n'est pas retiré lors du raffinage. Or, le soufre dans l'essence nuit à l'efficacité des systèmes de réduction des émissions (pots catalytiques) et contribue à la pollution de l'air. Afin de lutter contre la pollution de l'environnement, l'ensemble des pays adoptent en conséquence progressivement des spécifications sévères en soufre, les spécifications étant par exemple 10 ppm (poids) de soufre dans les essences commerciales en Europe, Chine, Etats-Unis et au Japon. Le problème de réduction des teneurs en soufre se concentre essentiellement sur les essences obtenues par craquage, qu'il soit catalytique (FCC Fluid Catalytic Cracking selon la terminologie anglo-saxonne) ou non catalytique (cokéfaction, viscoréduction, vapocraquage), principaux précurseurs de soufre dans les pools essence.

Une solution, bien connue de l'homme du métier, pour réduire la teneur en soufre consiste à effectuer un hydrotraitement (ou hydrodésulfuration) des coupes hydrocarbonées (et notamment des essences de craquage catalytique) en présence d'hydrogène et d'un catalyseur hétérogène. Cependant ce procédé présente l'inconvénient majeur d'entraîner une chute très importante de l'indice d'octane si le catalyseur mis en œuvre n'est pas assez sélectif. Cette diminution de l'indice d'octane est notamment liée à l'hydrogénation des oléfines présentes dans ce type d'essence de manière concomitante à l'hydrodésulfuration. Contrairement à d'autres procédés d'hydrotraitement, notamment ceux pour des charges de type gazole, l'hydrodésulfuration des essences doit donc permettre de répondre à une double contrainte antagoniste : assurer une hydrodésulfuration profonde des essences et limiter l'hydrogénation des composés insaturés présents.

La voie la plus utilisée pour répondre à la double problématique mentionnée ci-dessus consiste à employer des procédés dont l'enchaînement des étapes unitaires permet à la fois de maximiser l'hydrodésulfuration tout en limitant l'hydrogénation des oléfines. Ainsi, les procédés les plus récents, tels que le procédé Prime G+ (marque commerciale), permettent de désulfurer les essences de craquage riches en oléfines, tout en limitant l'hydrogénation des mono-oléfines et par conséquent la perte d'octane et la forte consommation d'hydrogène qui en résulte. De tels procédés sont par exemple décrits dans les demandes de brevet EP 1 077 247 et EP 1 174 485.

L'obtention de la sélectivité de réaction recherchée (ratio entre hydrodésulfuration et hydrogénation des oléfines) peut donc être en partie due au choix du procédé mais dans tous les cas l'utilisation d'un système catalytique intrinsèquement sélectif est très souvent un facteur clé. D'une façon générale, les catalyseurs utilisés pour ce type d'application sont des catalyseurs de type sulfure contenant un élément du groupe VIB (Cr, Mo, W) et un élément du groupe VIII (Fe, Ru, Os, Co, Rh, Ir, Pd, Ni, Pt). De tels catalyseurs sont par exemple divulgués dans les documents US 5 985 136, US 4 140 626, US 4 774 220, US 8 637 423 et EP 1 892 039 qui décrivent des catalyseurs d'hydrodésulfuration sélectifs.

Il existe donc aujourd'hui un vif intérêt chez les raffineurs pour un procédé d'hydrodésulfuration de coupes essences qui présente des performances catalytiques maintenues en termes d'activité catalytique tout en améliorant significativement la sélectivité.

Il est connu que la présence de carbone dans un catalyseur d'hydrodésulfuration d'une coupe essence peut améliorer la sélectivité. Ainsi, le document US 2 793 170 décrit un procédé d'hydrodésulfuration d'une essence craquée en présence d'un catalyseur contenant entre 0,2 et 6% pds de carbone. Le document FR 2 850 299 décrit un procédé d'hydrodésulfuration d'une essence craquée en présence d'un catalyseur avec une teneur en carbone inférieure ou égale à 2,8 % pds.

Le document EP 0 745 660 décrit un procédé d'hydrodésulfuration d'une coupe essence oléfinique utilisant un catalyseur préalablement coké en surface, avec une teneur en carbone comprise entre 3 et 10% pds par rapport au poids du catalyseur et un rapport atomique C/H ≤ 0,7 (= rapport H/C ≥ 1,42) dans le coke.

Le document US2009/0258780 quant à lui décrit qu'un catalyseur contenant un métal du groupe VIII, du molybdène (Mo), du phosphore et du soufre supporté sur un support d'oxyde inorganique poreux comprenant un matériau carboné permet d'observer une augmentation de la sélectivité dans un procédé d'hydrodésulfuration d'une essence. Le matériau carboné doit contenir de l'oxygène et se caractérise par une teneur en carbone comprise entre 5 et 20 % pds par rapport au poids du support, un rapport atomique de la quantité d'hydrogène par rapport à la quantité de carbone H/C de 0,4 à 1,0, et un rapport atomique de la quantité d'oxygène par rapport à la quantité de carbone O/C de 0,1 à 0,6.

Ces deux derniers documents montrent que non seulement la teneur, mais également la nature chimique du matériau carboné semble avoir une influence sur la sélectivité du procédé.

La présente invention concerne donc un procédé d'hydrodésulfuration d'une coupe essence qui a pour objet le maintien en activité hydrodésulfurante et l'amélioration significative de la sélectivité en mettant en œuvre un catalyseur contenant un matériau graphitique caractérisé par son rapport H/C et ne contenant pas d'oxygène.

Objets de l'invention

L'invention concerne un procédé d'hydrodésulfuration d'une coupe essence contenant des composés soufrés et des oléfines dans lequel on met en contact ladite coupe essence, de l'hydrogène et un catalyseur, ledit procédé étant effectué à une température comprise entre 200 et 400°C, une pression totale comprise entre 1 et 3 MPa, une vitesse volumique horaire, définie comme étant le débit volumique de charge rapporté au volume de catalyseur, comprise entre 1 et 10 h$^{-1}$, et un rapport volumique hydrogène/charge essence compris entre 100 et 1200 NL/L, ledit catalyseur comprend un support d'oxyde, du soufre et une phase active comprenant au moins un métal du groupe VIB et au moins un métal du groupe VIII, ledit catalyseur contenant entre outre un matériau graphitique contenant du carbone et de l'hydrogène, la teneur en carbone, exprimée en élément carbone, étant comprise entre 5 et 20 % pds par rapport au poids du catalyseur et le rapport atomique H/C est compris entre 0,8 et 1,2, ledit matériau graphitique ne contenant pas d'oxygène.

Il a en effet été constaté que l'utilisation d'un catalyseur contenant du soufre et un matériau graphitique avec une teneur en carbone relativement élevée et un rapport atomique H/C inférieur à 1,4 sans contenir de l'oxygène permet d'observer une augmentation significative de la sélectivité dans un procédé d'hydrodésulfuration sélective d'une coupe essence sans pour autant observer une perte d'activité.

En effet, sans être lié à aucune théorie, il semble que la présence du soufre et d'un tel matériau graphitique dans le catalyseur facilite la dispersion des métaux au sein du support en permettant d'éviter les phénomènes de remontée de pH classiquement observée en absence du matériau graphitique lors de l'imprégnation de la solution contenant les précurseurs métalliques. Le maintien d'un pH assez bas permet ainsi la présence d'hétéropolyanions au détriment d'espèces monomolybdates et polymolybdates, lesdits hétéropolyanions favorisant la sulfuration des espèces métalliques et la formation de phases sulfures plus sélectives.

L'utilisation du catalyseur contenant un matériau graphitique permet également d'éviter ou d'atténuer les emballements thermiques (« run away » selon la terminologie anglo-saxonne) lors du procédé d'hydrodésulfuration qui se caractérise par des réactions très exothermiques.

Selon une variante, la teneur en carbone exprimée en élément carbone est comprise entre 10 et 15 % poids par rapport au poids du catalyseur.

Selon une variante, la teneur en soufre exprimée en élément soufre est comprise entre 1 et 8% poids par rapport au poids du catalyseur.

Dans l'invention, le rapport atomique H/C est compris entre 0,8 et 1,2.

Selon une variante, le catalyseur a une teneur en métal du groupe VIB comprise entre 5 et 40 % poids, exprimée en oxyde de métal du groupe VIB, par rapport au poids total du catalyseur et une teneur en métal du groupe VIII comprise entre 1 et 10 % poids, exprimée en oxyde de métal du groupe VIII, par rapport au poids total du catalyseur.

Selon une variante, le rapport molaire métal du groupe VIII sur métal du groupe VIB dans le catalyseur est compris entre 0,1 et 0,8.

Selon une variante, la surface spécifique du catalyseur est comprise entre 20 et 200 m$^2$/g.

Selon une variante, le catalyseur comprend en outre du phosphore à une teneur comprise entre 0,1 et 20 % poids exprimée en P$_2$O$_5$ par rapport au poids total du catalyseur.

Selon une variante, le catalyseur comprend en outre un composé organique contenant de l'oxygène et/ou de l'azote et/ou du soufre.

Selon cette variante, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée, amide, ou un composé incluant un cycle furanique ou encore un sucre, et plus particulièrement le composé organique est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural, le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-penta-nediol, la 1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

Selon une variante, la phase active du catalyseur est constituée de cobalt et de molybdène.

Selon une variante, le catalyseur est préparé selon un procédé de préparation comprenant les étapes suivantes :

a) on met en contact au moins un hydrocarbure et un composé soufré avec ledit support d'oxyde permettant de former ledit matériau graphitique comprenant le carbone et l'hydrogène sur le support d'oxyde,

b) puis on met en contact un composé comportant un métal du groupe VIB et un composé comportant un métal du groupe VIII, et optionnellement du phosphore et/ou au moins un composé organique comprenant de l'oxygène et/ou de l'azote et/ou du soufre avec ledit support d'oxyde contenant ledit matériau graphitique, de manière à obtenir un précurseur catalytique,

c) on sèche ledit précurseur catalytique à une température inférieure à 200°C sans calcination ultérieure, de manière à obtenir un catalyseur séché,

d) on active optionnellement le catalyseur séché en présence d'un agent sulfurant.

Selon une autre variante, le catalyseur est un catalyseur au moins partiellement usé issu d'un procédé hydrotraitement.

Selon une variante, l'essence est une essence de craquage catalytique.

Définitions

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

On entend par surface spécifique, la surface spécifique BET ($S_{BET}$ en m$^2$/g) déterminée par adsorption d'azote conformément à la norme ASTM D 3663-78 établie à partir de la méthode BRUNAUER-EMMETT-TELLER décrite dans le périodique "The Journal of American Society', 1938, 60, 309.

On entend par volume poreux total du catalyseur ou du support utilisé pour la préparation du catalyseur le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur. Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Les teneurs en métaux du groupe VIII et du groupe VIB sont mesurées par fluorescence X.

Les teneurs en métal du groupe VIB, en métal du groupe VIII et en phosphore dans le catalyseur sont exprimées en oxydes après correction de la perte au feu de l'échantillon de catalyseur à 550°C pendant deux heures en four à moufle. La perte au feu est due à la perte d'humidité. Elle est déterminée selon l'ASTM D7348.

Description détaillée de l'invention

L'invention concerne un procédé d'hydrodésulfuration d'une coupe essence contenant des composés soufrés et des oléfines dans lequel on met en contact ladite coupe essence, de l'hydrogène et un catalyseur, ledit procédé étant effectué à une température comprise entre 200 et 400°C, une pression totale comprise entre 1 et 3 MPa, une vitesse volumique horaire, définie comme étant le débit volumique de charge rapporté au volume de catalyseur, comprise entre 1 et 10 h$^{-1}$, et un rapport volumique hydrogène/charge essence compris entre 100 et 1200 NL/L, ledit catalyseur comprend un support d'oxyde, du soufre et une phase active comprenant au moins un métal du groupe VIB et au moins un métal du groupe VIII, ledit catalyseur contenant entre outre un matériau graphitique contenant du carbone et de l'hydrogène, la teneur en carbone, exprimée en élément carbone, étant comprise entre 5 et 20 % pds par rapport au poids du catalyseur et le rapport atomique H/C est compris entre 0,8 et 1,2, ledit matériau graphitique ne contenant pas d'oxygène.

Le procédé d'hydrodésulfuration selon l'invention permet de transformer les composés organo-soufrés d'une coupe essence en sulfure d'hydrogène (H$_2$S) tout en limitant autant que possible l'hydrogénation des oléfines présentes dans ladite coupe.

Le procédé d'hydrodésulfuration comprend la mise en contact de la coupe d'essence contenant des composés soufrés et des oléfines avec le catalyseur et de l'hydrogène dans les conditions suivantes :

- une température comprise entre 200 et 400°C, de préférence comprise entre 230 et 330°C ;

- à une pression totale comprise entre 1 et 3 MPa, de préférence comprise entre 1,5 et 2,5 MPa ;
- une Vitesse Volumique Horaire (VVH), définie comme étant le débit volumique de charge rapporté au volume de catalyseur, comprise entre 1 et 10 $h^{-1}$, de préférence comprise entre 2 et 6 $h^{-1}$ ;
- un rapport volumique hydrogène/charge essence compris entre 100 et 1200 NL/L, de préférence compris entre 150 et 400 NL/L.

Le procédé d'hydrodésulfuration catalytique peut être réalisé dans un ou plusieurs réacteurs en série du type lit fixe ou du type lit bouillonnant. Si le procédé est mis en œuvre au moyen d'au moins deux réacteurs en série, il est possible de prévoir un dispositif d'élimination de l'$H_2S$ de l'effluent issu du premier réacteur d'hydrodésulfuration avant de traiter ledit effluent dans le deuxième réacteur d'hydrodésulfuration. Les conditions opératoires dans les deux réacteurs peuvent être identiques ou non.

Charge à traiter

Le procédé selon l'invention permet de traiter tout type de coupe essence contenant des composés soufrés et des oléfines, telle que par exemple une coupe issue d'une unité de cokéfaction (coking selon la terminologie anglo-saxonne), de viscoréduction (visbreaking selon la terminologie anglo-saxonne), de vapocraquage (steam cracking selon la terminologie anglo-saxonne) ou de craquage catalytique (FCC, Fluid Catalytic Cracking selon la terminologie anglo-saxonne). Cette essence peut éventuellement être composée d'une fraction significative d'essence provenant d'autres procédés de production telle que la distillation atmosphérique (essence issue d'une distillation directe (ou essence straight run selon la terminologie anglo-saxonne) ou de procédés de conversion (essence de cokéfaction ou de vapocraquage). La dite charge est de préférence constituée d'une coupe essence issue d'une unité de craquage catalytique.

La charge est avantageusement une coupe essence contenant des composés soufrés et des oléfines et a une température d'ébullition comprise entre 30 et inférieure à 250°C, de préférence entre 35°C et 240°C, et de manière préférée entre 40°C et 220°C.

La teneur en soufre des coupes essences produites par craquage catalytique (FCC) dépend de la teneur en soufre de la charge traitée par le FCC, de la présence ou non d'un prétraitement de la charge du FCC, ainsi que du point final de la coupe. Généralement, les teneurs en soufre de l'intégralité d'une coupe essence, notamment celles provenant du FCC, sont supérieures à 100 ppm en poids et la plupart du temps supérieures à 500 ppm en poids. Pour des essences ayant des points finaux supérieurs à 200°C, les teneurs en soufre sont souvent supérieures à 1000 ppm en poids, elles peuvent même dans certains cas atteindre des valeurs de l'ordre de 4000 à 5000 ppm en poids.

Par ailleurs les essences issues d'unités de craquage catalytique (FCC) contiennent, en moyenne, entre 0,5% et 5% poids de dioléfines, entre 20% et 50% poids d'oléfines, entre 10 ppm et 0,5% poids de soufre dont généralement moins de 300 ppm de mercaptans. Les mercaptans se concentrent généralement dans les fractions légères de l'essence et plus précisément dans la fraction dont la température d'ébullition est inférieure à 120°C.

Il est à noter que les composés soufrés présents dans l'essence peuvent également comprendre des composés soufrés hétérocycliques, tels que par exemple les thiophènes, les alkylthiophènes ou des benzothiophènes.

De préférence, l'essence traitée par le procédé selon l'invention est une essence lourde (ou HCN pour Heavy Cracked Naphtha selon la terminologie anglo-saxonne) issue d'une étape de distillation visant à séparer une coupe large de l'essence issue d'un procédé de craquage (ou FRCN pour Full Range Cracked Naphtha selon la terminologie anglo-saxonne) en une essence légère (LCN pour Light Cracked Naphtha selon la terminologie anglo-saxonne) et une essence lourde HCN. Le point de coupe de l'essence légère et de l'essence lourde est déterminé afin de limiter la teneur en soufre de l'essence légère et de permettre son utilisation dans le pool essence de préférence sans post traitement supplémentaire.

De façon avantageuse, la coupe large FRCN est soumise à une étape d'hydrogénation sélective décrite ci-après avant l'étape de distillation de manière à hydrogéner au moins partiellement les dioléfines et réaliser une réaction d'alourdissement d'une partie des composés soufrés.

A cette fin, la coupe large FRCN est envoyée dans un réacteur catalytique d'hydrogénation sélective contenant au moins un lit fixe ou mobile de catalyseur d'hydrogénation sélective des dioléfines et d'alourdissement des mercaptans. La réaction d'hydrogénation sélective des dioléfines et d'alourdissement des mercaptans s'effectue préférentiellement sur un catalyseur sulfuré comprenant au moins un élément du groupe VIII et éventuellement au moins un élément du groupe VIB et un support d'oxyde. L'élément du groupe VIII est choisi de préférence parmi le nickel et le cobalt et en particulier le nickel. L'élément du groupe VIB, lorsqu'il est présent, est de préférence choisi parmi le molybdène et le tungstène et de manière très préférée le molybdène. Le support d'oxyde du catalyseur d'hydrogénation sélective est de préférence choisi parmi l'alumine, l'aluminate de nickel, la silice, le carbure de silicium, ou un mélange de ces oxydes. On utilise, de manière préférée, de l'alumine et de manière encore plus préférée, de l'alumine de haute pureté. Selon un mode de réalisation préféré le catalyseur d'hydrogénation sélective contient du nickel à une teneur en poids d'oxyde de nickel (sous forme NiO) comprise entre 1 et 12%, et du molybdène à une teneur en poids d'oxyde de molybdène (sous forme

MoO$_3$) comprise entre 6% et 18% et un rapport molaire nickel/molybdène compris entre 0,3 et 2,5, les métaux étant déposés sur un support constitué d'alumine et dont le taux de sulfuration des métaux constituant le catalyseur étant supérieur à 50%.

Lors de l'étape optionnelle d'hydrogénation sélective, l'essence est mise en contact avec le catalyseur à une température comprise entre 50°C et 250°C, et de préférence entre 80°C et 220°C, et de manière encore plus préférée entre 90°C et 200°C, avec une vitesse spatiale liquide (LHSV) comprise entre 0,5 h$^{-1}$ et 20 h$^{-1}$, l'unité de la vitesse spatiale liquide étant le litre de charge par litre de catalyseur et par heure (L/L.h). La pression est comprise entre 0,4 MPa et 5 MPa, de préférence entre 0,6 et 4 MPa et de manière encore plus préférée entre 1 et 2 MPa. L'étape optionnelle d'hydrogénation sélective est typiquement réalisée avec un rapport H$_2$/charge essence compris entre 2 et 100 Nm$^3$ d'hydrogène par m$^3$ de charge, de manière préférée entre 3 et 30 Nm$^3$ d'hydrogène par m$^3$ de charge.

Catalyseur

Le catalyseur du procédé selon l'invention comprend un support d'oxyde, du soufre et une phase active comprenant au moins un métal du groupe VIB et au moins un métal du groupe VIII, ledit catalyseur contenant entre outre un matériau graphitique. Il peut en plus comprendre du phosphore et/ou du soufre et/ou un composé organique tel que décrit ci-après.

Le support d'oxyde dudit catalyseur du procédé selon l'invention est habituellement un solide poreux choisi dans le groupe constitué par : les alumines, la silice, les silices alumine ou encore les oxydes de titane ou de magnésium utilisés seul ou en mélange avec l'alumine ou la silice alumine.

Le support d'oxyde présente avantageusement un volume poreux total compris entre 0,1 et 1,5 mL/g, de préférence entre 0,4 et 1,1 mL/g.

Le support d'oxyde présente avantageusement une surface spécifique comprise entre 5 et 400 m$^2$.g$^{-1}$, de préférence entre 10 et 350 m$^2$.g$^{-1}$, de manière plus préférée entre 40 et 350 m$^2$.g$^{-1}$.

Il est de préférence choisi dans le groupe constitué par : la silice, la famille des alumines de transition et les silices alumine, de manière très préférée, le support d'oxyde est essentiellement constitué par au moins une alumine de transition, c'est-à-dire qu'il comprend au moins 51 % poids, de préférence au moins 60 % poids de manière très préféré au moins 80 % poids, voire au moins 90 % poids d'alumine de transition. Il est de préférence constitué uniquement d'une alumine de transition. De manière préférée, le support d'oxyde dudit catalyseur du procédé selon l'invention est une alumine de phase gamma.

Dans un autre cas préféré, l'oxyde présent dans le support dudit catalyseur du procédé selon l'invention est une silice-alumine contenant au moins 50 % poids d'alumine par rapport au poids total du support composite. La teneur en silice dans le support est d'au plus 50% poids par rapport au poids total du support, le plus souvent inférieure ou égale à 45% poids, de préférence inférieure ou égale à 40%.

Les sources de silicium sont bien connues de l'Homme du métier. On peut citer à titre d'exemple l'acide silicique, la silice sous forme de poudre ou sous forme colloïdale (sol de silice), le tétraéthylorthosilicate Si(OEt)$_4$.

Lorsque le support dudit catalyseur est à base de silice, il contient plus de 50 % poids de silice par rapport au poids total du support et, de façon générale, il contient uniquement de la silice.

Selon une variante particulièrement préférée, le support est constitué d'alumine, de silice ou de silice-alumine.

Le support se présente avantageusement sous forme de billes, d'extrudés, de pastilles ou d'agglomérats irréguliers et non sphériques dont la forme spécifique peut résulter d'une étape de concassage.

La phase active du catalyseur comprend au moins un métal du groupe VIB et au moins un métal du groupe VIII. Le métal du groupe VIB présent dans la phase active du catalyseur est préférentiellement choisi parmi le molybdène et le tungstène. Le métal du groupe VIII présent dans la phase active du catalyseur est préférentiellement choisi parmi le cobalt, le nickel et le mélange de ces deux éléments. La phase active du catalyseur est choisie de préférence dans le groupe formé par la combinaison des éléments nickel-molybdène, cobalt-molybdène et nickel-cobalt-molybdène et de manière très préférée la phase active est constituée de cobalt et de molybdène.

La teneur en métal du groupe VIII est comprise entre 1 et 10% poids exprimée en oxyde de métal du groupe VIII par rapport au poids total du catalyseur, de préférence comprise entre 1,5 et 9 % poids, et de préférence comprise entre 2 et 8% poids. Lorsque le métal est le cobalt ou le nickel, la teneur en métal s'exprime en CoO ou NiO respectivement.

La teneur en métal du groupe VIB est comprise entre 5 et 40 % poids exprimée en oxyde de métal du groupe VIB par rapport au poids total du catalyseur, de préférence comprise entre 8 et 35 % poids, de manière très préférée comprise entre 10 et 30 % poids. Lorsque le métal est le molybdène ou le tungstène, la teneur en métal s'exprime en MoO$_3$ ou WO$_3$ respectivement.

Le rapport molaire métal du groupe VIII sur métal du groupe VIB dans le catalyseur est préférentiellement compris entre 0,1 et 0,8, de préférence compris entre 0,15 et 0,6 et de manière encore plus préférée compris entre 0,15 et 0,45.

Le catalyseur du procédé selon l'invention comprend un matériau graphitique contenant du carbone et de l'hydrogène, ledit matériau graphitique ne contenant pas d'oxygène.

On entend par matériau graphitique contenant du carbone et de l'hydrogène un matériau issu d'une carbonisation d'un ou de composé(s) hydrocarboné(s) ne contenant pas d'oxygène. Le matériau graphitique peut aussi être du coke formé sur le catalyseur lors son utilisation dans un procédé d'hydrotraitement au préalable. On notera que le terme "matériau graphitique" dans la présente demande désigne une substance à base d'hydrocarbures déposée sur la surface du catalyseur ou du support d'oxyde lors de son utilisation, fortement cyclisée et condensée et ayant une apparence similaire au graphite.

Il est important de souligner que le carbone et l'hydrogène du matériau graphitique ne sont pas (ou plus) sous la forme d'une molécule organique. Cependant, le catalyseur peut contenir, en plus du matériau graphitique contenant du carbone et de l'hydrogène, un composé organique (additif) telle que décrit ci-dessous.

La teneur en carbone, exprimée en élément carbone, est comprise entre 5 et 20 % poids, de préférence entre 7 et 18 % poids et de manière très préférée entre 10 et 15 % poids par rapport au poids total du catalyseur.

Le rapport atomique hydrogène sur carbone est compris entre 0,8 et 1,2. La teneur en carbone du catalyseur se réfère à la teneur en carbone du catalyseur sans prise en compte du carbone contenu dans un éventuel additif organique contenu dans ledit catalyseur. A cette fin, la teneur en carbone et le rapport atomique H/C sont déterminés selon la méthode ASTM D5373 après prétraitement du catalyseur sous flux d'air sec à 300°C pendant 2 heures et un débit de 2 L/h/g.

La teneur en carbone se réfère au catalyseur en début du procédé d'hydrodésulfuration. Au cours du temps du procédé, la teneur en carbone peut augmenter dû au dépôt de coke.

Le catalyseur du procédé selon l'invention comprend également du soufre.

La teneur en soufre dans ledit catalyseur est de préférence comprise entre 1 et 8 % poids exprimée en élément soufre, de préférence entre 1 et 6 %, et de manière très préférée entre 2 et 5 % poids par rapport au poids total du catalyseur.

La teneur en soufre du catalyseur se réfère à la teneur totale en soufre du catalyseur introduit lors de la formation du matériau graphitique (carbonisation) ou déjà contenu dans un catalyseur usé, avec prise en compte du soufre contenu dans un éventuel additif organique contenu dans ledit catalyseur ou introduit par une éventuelle activation (sulfuration). A cette fin, la teneur en soufre est déterminée selon la méthode ASTM D5373 (classique, c'est-à-dire sans ledit prétraitement du catalyseur effectué pour la mesure de la teneur en carbone).

Le catalyseur du procédé selon l'invention peut également comprendre du phosphore en tant que dopant. Le dopant est un élément ajouté qui en lui-même ne présente aucun caractère catalytique mais qui accroit l'activité catalytique de la phase active.

La teneur en phosphore dans ledit catalyseur est de préférence comprise entre 0,1 et 20 % poids exprimée en $P_2O_5$ par rapport au poids total du catalyseur, de préférence entre 0,2 et 15 % poids exprimé en $P_2O_5$, et de manière très préférée entre 0,3 et 6 % poids exprimé en $P_2O_5$.

Le catalyseur peut également comprendre en outre au moins un composé organique contenant de l'oxygène et/ou de l'azote et/ou du soufre avant sulfuration. De tels additifs sont décrits par la suite.

Lorsque le composé organique est présent, la teneur totale en composé(s) organique(s) contenant de l'oxygène et/ou de l'azote et/ou du soufre présent(s) dans le catalyseur est généralement comprise entre 1 et 30 % poids, de préférence entre 1,5 et 25 % poids, et de manière plus préférée entre 2 et 20 % poids par rapport au poids total du catalyseur.

Le catalyseur du procédé selon l'invention présente avantageusement un volume poreux total supérieur ou égal à 0,15 mL/g, de préférence supérieur ou égal à 0,18 mL/g, et de manière particulièrement préférée compris entre 0,2 et 0,5 mL/g.

Le catalyseur du procédé selon l'invention se caractérise avantageusement par une surface spécifique comprise entre 20 et 200 $m^2$/g, de préférence comprise entre 30 et 180 $m^2$/g, de préférence comprise entre 40 et 160 $m^2$/g, de manière très préférée comprise entre 50 et 150 $m^2$/g.

Le catalyseur du procédé selon l'invention est avantageusement sous forme de grains ayant un diamètre moyen compris entre 0,5 et 10 mm. Les grains peuvent avoir toutes les formes connues de l'Homme du métier, par exemple la forme de billes (ayant de préférence un diamètre compris entre 1 et 6 mm), d'extrudés, de tablettes, de cylindres creux. De préférence, le catalyseur (et le support utilisé pour la préparation du catalyseur) sont soit sous forme d'extrudés de diamètre moyen compris entre 0,5 et 10 mm, de préférence entre 0,8 et 3,2 mm et de longueur moyenne comprise entre 0,5 et 20 mm, soit sous forme de billes de diamètre moyen compris entre 0,5 et 10 mm, de préférence entre 1,4 et 4 mm. On entend par « diamètre moyen » des extrudés le diamètre moyen du cercle circonscrit à la section droite de ces extrudés. Le catalyseur peut être avantageusement présenté sous la forme d'extrudés cylindriques, multilobés, trilobés ou quadrilobés. De préférence sa forme sera trilobée ou quadrilobée. La forme des lobes pourra être ajustée selon toutes les méthodes connues de l'art antérieur.

Procédé de préparation du catalyseur

Le catalyseur du procédé selon l'invention peut être préparé selon tout mode de préparation d'un catalyseur connu de l'Homme de l'art.

Le catalyseur du procédé selon l'invention peut être préparé selon un procédé de préparation comprenant les étapes suivantes :

a) on met en contact au moins un hydrocarbure et un composé soufré avec ledit support d'oxyde permettant de former ledit matériau graphitique comprenant le carbone et l'hydrogène sur le support d'oxyde,

b) puis on met en contact un composé comportant un métal du groupe VIB et un composé comportant un métal du groupe VIII, et optionnellement du phosphore et/ou au moins un composé organique comprenant de l'oxygène et/ou de l'azote et/ou du soufre avec ledit support d'oxyde contenant ledit matériau graphitique,

de manière à obtenir un précurseur catalytique,

c) on sèche ledit précurseur catalytique à une température inférieure à 200°C sans calcination ultérieure, de manière à obtenir un catalyseur séché,

d) on active optionnellement le catalyseur séché en présence d'un agent sulfurant.

L'étape a) de mise en contact d'au moins un hydrocarbure et un composé soufré avec ledit support d'oxyde permettant de former ledit matériau graphitique peut être effectuée selon différentes variantes. La préparation du support d'oxyde contenant le matériau graphitique peut être réalisée par carbonisation d'un support oxyde par une mise en contact dudit support d'oxyde avec au moins un hydrocarbure choisi parmi les oléfines, les diènes, les mono- et polyaromatiques et un composé soufré, généralement en présence d'un flux gazeux contenant un gaz choisi parmi l'azote ou l'hydrogène.

On entend par un hydrocarbure un composé comprenant, et de préférence constitué, d'atomes de carbone et d'hydrogène. Ledit hydrocarbure ne contient notamment pas d'atomes d'oxygène.

Selon une première variante de carbonisation, ledit matériau graphitique est formé par la méthode de dépôt chimique en phase vapeur de composés oléfiniques et/ou diéniques. Selon cette première variante, le matériau graphitique mis en œuvre dans le procédé selon l'invention est préparé par un procédé comprenant une étape de mise en contact d'un gaz comprenant de l'azote ou de l'hydrogène, un composé soufré, et un ou plusieurs hydrocarbures oléfiniques et/ou diéniques, avec le support d'oxyde à une température comprise entre 500 et 900°C, une pression comprise entre 0,05 et 10 MPa et à durée comprise entre 0,25 et 12 heures. Ledit composé soufré peut être l'$H_2S$ ou un composé susceptible de se décomposer en $H_2S$, comme par exemple le diméthyldisulfure. Ledit hydrocarbure oléfinique et/ou diénique est une molécule contenant une ou plusieurs insaturations, avantageusement de type oléfine (éthylène, propylène, butène) ou diène (isoprène, butadiène).

Selon une deuxième variante de carbonisation, ledit matériau graphitique est formé par réaction d'un ou plusieurs hydrocarbures choisis parmi les composés mono- ou polyaromatiques. Selon cette deuxième variante, le matériau graphitique mis en œuvre dans le procédé selon l'invention est préparé par un procédé comprenant une étape de mise en contact d'un gaz comprenant de l'azote ou de l'hydrogène, un composé soufré, et un ou plusieurs hydrocarbures contenant au moins un noyau aromatique, avec le support d'oxyde à une température comprise entre 300 et 600°C, une pression comprise entre 0,05 et 10 MPa et à durée comprise entre 0,25 et 12 heures. Ledit composé soufré peut être l'$H_2S$ ou un composé susceptible de se décomposer en $H_2S$, comme par exemple le diméthyldisulfure. Ledit hydrocarbure est une molécule contenant une ou plusieurs noyaux aromatiques, avantageusement de type monoaromatiques (benzène, toluène, ortho-xylène, méta-xylène, para-xylène, tétraline) ou diaromatiques.

Selon une troisième variante de carbonisation, ledit matériau graphitique est formé par réaction d'une coupe hydrocarbonée présentant au moins 90% des composés dont la température d'ébullition est comprise entre 250°C et 400°C à pression atmosphérique.

Cette coupe contient généralement un mélange de plusieurs hydrocarbures mono- ou polyaromatiques, oléfiniques et diéniques. Selon cette troisième variante, le matériau graphitique mis en œuvre dans le procédé selon l'invention est préparé par un procédé comprenant une étape de mise en contact d'un gaz comprenant de l'azote ou de l'hydrogène, d'au moins un composé soufré et d'une coupe hydrocarbonée présentant au moins 90% des composés dont la température d'ébullition est comprise entre 250°C et 400°C à pression atmosphérique, avec le support d'oxyde à une température comprise entre 300 et 600°C, une pression comprise entre 0,05 et 15 MPa et à durée comprise entre 0,25 et 12 heures. Le dit composé soufré peut être l'$H_2S$ ou un composé susceptible de se décomposer en $H_2S$, comme par exemple le diméthyldisulfure, ou tout autre composé contenant du soufre comme le thiophène, les alkyls thiophènes, le benzothiophène, les alkyls benzothiophènes, le dibenzothiophène ou les alkyls dibenzothiophènes. Ladite coupe ne contient pas de composés oxygénés.

Selon l'étape b) du procédé de préparation du catalyseur utilisé selon le procédé de l'invention, on met en contact un composé comportant un métal du groupe VIB et un composé comportant un métal du groupe VIII, et optionnellement du phosphore et/ou au moins un composé organique comprenant de l'oxygène et/ou de l'azote et/ou du soufre avec ledit support d'oxyde contenant le matériau graphitique.

La mise en contact d'au moins un composé comportant un métal du groupe VIB et d'au moins un composé comportant un métal du groupe VIII avec ledit support d'oxyde contenant le matériau graphitique peut avantageusement être réalisée par toute technique connue de l'Homme du métier, comme par exemple l'échange ionique, l'imprégnation à sec, l'imprégnation par excès, le dépôt en phase vapeur, etc. La mise en contact peut se dérouler en une étape ou en plusieurs étapes successives. Selon un mode préféré, ladite ou lesdites étapes de mise en contact est (sont) effectuée(s) par la méthode d'imprégnation dite "à sec" bien connue de l'Homme du métier en mettant en contact une solution d'imprégnation contenant un composé comportant un métal du groupe VIII et un composé comportant un métal du groupe VIB avec ledit support d'oxyde contenant le matériau graphitique.

La mise en contact fait avantageusement intervenir un précurseur des dits métaux.

A titre d'exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique ($H_3PMo_{12}O_{40}$), et leurs sels, et éventuellement l'acide silicomolybdique ($H_4SiMo_{12}O_{40}$) et ses sels. Les sources de molybdène peuvent être également tout hétéropolycomposé de type Keggin, Keggin lacunaire, Keggin substitué, Dawson, Anderson, Strandberg, par exemple. On utilise de préférence le trioxyde de molybdène et les hétéropolycomposés de type Keggin, Keggin lacunaire, Keggin substitué et Strandberg.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Les précurseurs de cobalt qui peuvent être utilisés sont avantageusement choisis parmi les oxydes, les hydroxydes, les hydroxycarbonates, les carbonates et les nitrates, par exemple. L'hydroxyde de cobalt et le carbonate de cobalt sont utilisés de manière préférée.

Les précurseurs de nickel qui peuvent être utilisés sont avantageusement choisis parmi les oxydes, les hydroxydes, les hydroxycarbonates, les carbonates et les nitrates, par exemple.

Toute solution d'imprégnation décrite dans la présente invention peut comprendre tout solvant protique polaire connu de l'homme du métier. De manière préférée, on utilise un solvant protique polaire, par exemple choisi dans le groupe formé par le méthanol, l'éthanol, et l'eau. De manière préférée, la solution d'imprégnation comprend un mélange eau-éthanol ou eau-méthanol en tant que solvants afin de faciliter l'imprégnation du composé contenant un métal du groupe VIB et du composé contenant un métal du groupe VIII (et éventuellement du phosphore et/ou d'un composé organique tel que décrit ci-dessous) sur le support d'oxyde contenant le matériau graphitique et qui est donc en partie hydrophobe. De préférence, le solvant utilisé dans la solution d'imprégnation est constitué d'un mélange eau-éthanol ou eau-méthanol.

Selon une autre variante, l'étape de mise en contact b) peut également comprendre la mise en contact du support d'oxyde contenant le matériau graphitique avec une solution d'imprégnation contenant du phosphore, en plus du composé comportant un métal du groupe VIB et du composé comportant un métal du groupe VIII.

Le rapport molaire phosphore sur l'élément du groupe VIB dans le catalyseur est supérieur ou égal à 0,05, de préférence supérieur ou égal à 0,07, de préférence compris entre 0,08 et 1, de préférence compris entre 0,1 et 0,9 et de manière très préférée compris entre 0,15 et 0,6.

Le précurseur de phosphore préféré est l'acide orthophosphorique $H_3PO_4$, mais ses sels et esters comme les phosphates d'ammonium conviennent également. Le phosphore peut également être introduit en même temps que le(s) élément(s) du groupe VIB sous la forme d'hétéropolyanions de Keggin, Keggin lacunaire, Keggin substitué ou de type Strandberg.

Selon une autre variante encore, l'étape de mise en contact b) peut également comprendre la mise en contact du support d'oxyde contenant le matériau graphitique avec une solution d'imprégnation contenant un composé organique contenant de l'oxygène et/ou de l'azote et/ou du soufre, en plus du composé comportant un métal du groupe VIB, du composé comportant un métal du groupe VIII et éventuellement du phosphore. La fonction des additifs ou composés organiques est d'augmenter l'activité catalytique par rapport aux catalyseurs non additivés. Ledit composé organique est préférentiellement imprégné sur ledit catalyseur après solubilisation en solution aqueuse ou non aqueuse.

Dans ce cas, le rapport molaire du composé organique ajouté par métal du groupe VIB en solution est compris entre 0,01 à 5 mol/mol, de préférence compris entre 0,05 à 3 mol/mol, de manière préférée compris entre 0,05 et 2 mol/mol et de manière très préférée compris entre 0,1 et 1,5 mol/mol.

Lorsque plusieurs composés organiques sont présents, les différents rapports molaires s'appliquent pour chacun des composés organiques présents.

Généralement, le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée et amide, ou un composé incluant un cycle furanique ou encore un sucre.

On entend ici par un composé organique contenant de l'oxygène un composé ne comportant pas d'autre hétéroatome. A titre d'exemple, le composé organique contenant de l'oxygène peut être l'un ou plusieurs choisis dans le groupe constitué par l'éthylèneglycol, le diéthylèneglycol, le triéthylèneglycol, un polyéthylèneglycol (avec un poids moléculaire compris entre 200 et 1500 g/mol), le propylèneglycol, le 2-butoxyéthanol, 2-(2-butoxyéthoxy)éthanol, 2-(2-méthoxyéthoxy)éthanol, le triéthylèneglycoldiméthyléther, le glycérol, l'acétophénone, la 2,4-pentanedione, la pentanone, l'acide acétique, l'acide oxalique, l'acide maléique, l'acide malique, l'acide malonique, l'acide oxalique, l'acide gluconique, l'acide tartrique, l'acide citrique, l'acide γ-cétovalérique, un succinate de dialkyle C1-C4 et plus particulièrement le succinate de diméthyle, l'acétoacétate de méthyle, l'acétoacétate d'éthyle, le 3-oxobutanoate de 2-méthoxyéthyle, le 3-oxobutanoate de 2-méthacryloyloxyéthyle, le dibenzofurane, un éther couronne, l'acide orthophtalique, le glucose, le fructose, le saccharose, le sorbitol, le xylitol, la γ-valérolactone, la 2-acétylbutyrolactone, le carbonate de propylène, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, le 2-furoate de méthyle, l'alcool furfurylique (aussi connu sous le nom furfuranol), l'acétate de furfuryle, l'acide ascorbique, le lactate de butyle, le lactate d'éthyle, le butyryllactate de butyle, le 3-hydroxybutanoate d'éthyle, le 3-éthoxypropanoate d'éthyle, le 3-méthoxypropanoate de méthyle, l'acétate de 2-éthoxyéthyle, l'acétate de2-butoxyéthyle, l'acrylate de 2-hydroxyéthyle, le méthacrylate de 2-hydroxyéthyle, le 1,5-pentanediol, le 3-méthyl-1,5-pentanediol, le 1,5-hexanediol, le 3-éthyl-1,5-pentanediol, le 2,4-diéthyl-1,5-pentanediol, la 5-méthyl-2(3H)-furanone, le glycolate de butyle, le 4-oxo-pentanoate d'éthyle, le maléate de diéthyle, le maléate de diméthyle, le fumarate de diméthyle, le fumarate de diéthyle, l'adipate de diméthyle,le 3-oxoglutarate de diméthyle, le tartrate de diméthyle, le tartrate de diéthyle, le tartrate de diisopropyle, le tartrate de di-tert-butyle, le malate de diméthyle, le malate de diéthyle, le malate de diisopropyle et le malate de dibutyle.

Le composé organique contenant de l'azote peut être l'un ou plusieurs choisis parmi les composés comportant une ou plusieurs fonctions chimiques choisies parmi une fonction amine ou nitrile. On entend ici par un composé organique contenant de l'azote un composé ne comportant pas d'autre hétéroatome. A titre d'exemple, le composé organique contenant de l'azote peut être l'un ou plusieurs choisis dans le groupe constitué par l'éthylènediamine, la diéthylènetriamine, l'hexaméthylènediamine, la triéthylènetétramine, la tétraéthylènepentamine, la pentaéthylènehexamine, l'acétonitrile, l'octylamine, la guanidine ou un carbazole.

Le composé organique contenant de l'oxygène et de l'azote peut être l'un ou plusieurs choisis parmi les composés comportant une ou plusieurs fonctions chimiques choisies parmi une fonction acide carboxylique, alcool, éther, aldéhyde, cétone, ester, carbonate, amine, nitrile, imide, amide, urée ou oxime. On entend ici par un composé organique contenant de l'oxygène et de l'azote un composé ne comportant pas d'autre hétéroatome. A titre d'exemple, le composé organique contenant de l'oxygène et de l'azote peut être l'un ou plusieurs choisis dans le groupe constitué par l'acide 1,2-cyclohexanediaminetétraacétique, la monoéthanolamine (MEA), la 1-méthyl-2-pyrrolidinone, le diméthylformamide, l'acide éthylènediaminetétraacétique (EDTA), l'alanine, la glycine, l'acide nitrilotriacétique (NTA), l'acide N-(2-hydroxyéthyl)éthylènediamine-N,N',N'-triacétique (HEDTA), l'acide diéthylène-triaminepentaacétique (DTPA), la tétraméthylurée, l'acide glutamique, le diméthylglyoxime, la bicine, la tricine, le cyanoacétate de 2-méthoxyéthyle, la 1-éthyl-2-pyrrolidinone, la 1-vinyl-2-pyrrolidinone, la 1,3-diméthyl-2-imidazolidinone, la 1-(2-hydroxyéthyl)-2-pyrrolidinone, la 1-(2-hydroxyéthyl)-2,5-pyrrolidinedione, la 1-méthyl-2-pipéridinone, la 1-acétyl-2-azépanone, la 1-vinyl-2-azépanone et l'acide 4-aminobutanoïque.

Le composé organique contenant du soufre peut être l'un ou plusieurs choisis parmi les composés comportant une ou plusieurs fonctions chimiques choisies parmi une fonction thiol, thioéther, sulfone ou sulfoxyde. A titre d'exemple, le composé organique contenant du soufre peut être l'un ou plusieurs choisis dans le groupe constitué par l'acide thioglycolique, le 2,2'-thiodiéthanol, l'acide 2-hydroxy-4-méthylthiobutanoïque, un dérivé sulfoné d'un benzothiophène ou un dérivé sulfoxydé d'un benzothiophène, le 2-mercaptopropanoate d'éthyle, le 3-(méthylthio)propanoate de méthyle et le 3-(méthylthio)propanoate d'éthyle.

De préférence, le composé organique contient de l'oxygène, de manière préférée il est choisi parmi la γ-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide γ-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural (aussi connu sous le nom 5-(hydroxyméthyl)-2-furaldéhyde ou 5-HMF), le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

L'étape d'imprégnation comporte plusieurs modes de mises en œuvre. Ils se distinguent notamment par le moment de l'introduction du composé organique lorsqu'il est présent et qui peut être effectuée soit en même temps que l'imprégnation des métaux (co-imprégnation), soit après (post-imprégnation), soit avant (pré-imprégnation). De plus, on peut combiner les modes de mise en œuvre.

Avantageusement, après chaque étape d'imprégnation, on laisse maturer le support imprégné. La maturation permet à la solution d'imprégnation de se disperser de manière homogène au sein du support.

Toute étape de maturation décrite dans la présente invention est avantageusement réalisée à pression atmosphérique, dans une atmosphère saturée en eau et à une température comprise entre 17°C et 50°C, et de préférence à température ambiante. Généralement une durée de maturation comprise entre dix minutes et quarante-huit heures et de préférence comprise entre trente minutes et six heures, est suffisante.

Après l'étape b) on obtient ainsi un précurseur catalytique qui comprend le support d'oxyde comprenant le matériau graphitique, la phase active comprenant au moins un métal du groupe VIB et au moins un métal du groupe VIII, du soufre, et éventuellement du phosphore et/ou un composé organique contenant de l'oxygène et/ou de l'azote et/ou du soufre.

Selon l'étape c) du procédé de préparation du catalyseur utilisé selon le procédé de l'invention, on sèche ledit précurseur catalytique à une température inférieure à 200°C, avantageusement comprise entre 50°C et 180°C, de préférence entre 70°C et 150°C, de manière très préférée entre 75°C et 130°C, sans calcination ultérieure, de manière à obtenir un catalyseur séché.

L'étape de séchage est préférentiellement réalisée sous une atmosphère inerte typiquement sous une atmosphère d'azote.

L'étape de séchage peut être effectuée par toute technique connue de l'Homme du métier. Elle est avantageusement effectuée à pression atmosphérique ou à pression réduite. De manière préférée, cette étape est réalisée à pression atmosphérique. Elle est avantageusement effectuée en lit traversé en utilisant tout gaz chaud inerte. De manière préférée, lorsque le séchage est effectué en lit fixe, le gaz utilisé est l'argon ou l'azote. De manière très préférée, le séchage est réalisé en lit traversé en présence d'azote. De préférence, l'étape de séchage a une durée comprise entre 5 minutes et 15 heures, de préférence entre 30 minutes et 12 heures.

Selon une variante et avantageusement lorsqu'un composé organique est présent, le séchage est conduit de manière à conserver de préférence au moins 30 % poids du composé organique introduit lors d'une étape d'imprégnation, de préférence cette quantité est supérieure à 50% poids et de manière encore plus préférée, supérieure à 70 % poids, calculée sur la base du carbone restant sur le catalyseur.

La teneur en carbone provenant du composé organique peut être déterminée en faisant la différence entre la teneur en carbone mesurée selon ASTM D5373 avec et sans prétraitement du catalyseur séché sous flux d'air sec à 300°C pendant 2 heures et un débit de 2 L/h/g. En effet, le carbone du matériau graphitique présente une température de décomposition significativement plus élevée (généralement vers 400 à 450°C) que celle du composé organique (généralement vers 100 à 200°C).

Il est important de souligner que le catalyseur lors de son procédé de préparation ne subit pas de calcination afin de préserver le matériau graphitique et, lorsqu'il est présent, au moins en partie le composé organique dans le catalyseur. On entend ici par calcination un traitement thermique sous un gaz contenant de l'air ou de l'oxygène à une température supérieure ou égale à 200°C.

A l'issue de l'étape de séchage, on obtient alors un catalyseur séché, qui sera soumis à une étape d'activation optionnelle (sulfuration) pour sa mise en œuvre ultérieure en procédé d'hydrodésulfuration d'essences.

Ainsi, selon l'étape d) du procédé de préparation du catalyseur utilisé selon le procédé de l'invention, on active optionnellement le catalyseur séché en présence d'un agent sulfurant. La sulfuration est de préférence réalisée en milieu sulforéducteur, c'est-à-dire en présence d'$H_2S$ et d'hydrogène. La sulfuration est réalisée en injectant sur le catalyseur un flux contenant de l'$H_2S$ et de l'hydrogène, ou bien un composé soufré susceptible de se décomposer en $H_2S$ en présence du catalyseur et de l'hydrogène. Les polysulfures tel que le diméthyldisulfure (DMDS) sont des précurseurs d'$H_2S$ couramment utilisés pour sulfurer les catalyseurs. La température est ajustée afin que l'$H_2S$ réagisse avec le catalyseur séché pour former des sulfures métalliques tels que par exemple, le $MoS_2$ et le $Co_9S_8$. Cette sulfuration peut être réalisée in situ ou ex situ (en dedans ou dehors du réacteur) du réacteur du procédé selon l'invention à des températures comprises entre 200 et 600°C et plus préférentiellement entre 300 et 500°C.

Pour être actifs, les métaux doivent être substantiellement sulfurés. Un élément est considéré comme substantiellement sulfuré lorsque le rapport molaire entre le soufre (S) présent sur le catalyseur et le dit élément est au moins égal à 50% du rapport molaire théorique correspondant à la sulfuration totale de l'élément considéré. Le taux de sulfuration global est défini par l'équation suivante :

$$(S/\text{élément})_{catalyseur} >= 0,5 \times (S/\text{élément})_{théorique}$$

avec :

$(S/\text{élément})_{catalyseur}$ rapport molaire entre le soufre (S) et l'élément présent sur le catalyseur $(S/\text{élément})_{théorique}$ rapport molaire entre le soufre et l'élément correspondant à la sulfuration totale de l'élément en sulfure.

Ce rapport molaire théorique varie selon l'élément considéré :

- 

$$(S/Co)_{théorique} = 8/9$$

- 

$$(S/Ni)_{théorique} = 1/1$$

- 

$$(S/Mo)_{théorique} = 2/1$$

- 

$$(S/W)_{théorique} = 2/1$$

Le catalyseur comprenant plusieurs métaux, le rapport molaire entre le S présent sur le catalyseur et l'ensemble des éléments doit également être au moins égal à 50% du rapport molaire théorique correspondant à la sulfuration totale de chaque élément en sulfure, le calcul étant effectué au prorata des fractions molaires relatives de chaque élément.

Par exemple, pour un catalyseur comprenant du molybdène et du nickel avec une fraction molaire respective de 0,7 et 0,3, le rapport molaire minimal (S/Mo+Ni) est donné par la relation suivante :

$$(S/Mo+Ni)_{catalyseur} = 0,5 \times [(0,7 \times 2) + (0,3 \times 1)]$$

De façon très préférée, le taux de sulfuration des métaux sera supérieur à 70%.

Selon une autre variante de l'invention, le catalyseur du procédé selon l'invention ne subit pas d'étape de sulfuration, c'est-à-dire que le catalyseur n'est pas mis en contact avec un agent sulfurant, avant injection de la charge. Dans ce cas, le catalyseur est activé (sulfuré) par le soufre contenu dans la charge à désulfurer.

Selon une toute autre variante, le catalyseur du procédé selon l'invention peut être un catalyseur au moins partiellement usé. On entend par un catalyseur au moins partiellement usé un catalyseur qui sort d'un procédé d'hydrotraitement. Le catalyseur au moins partiellement usé peut être issu d'un hydrotraitement de n'importe quelle coupe pétrolière, telle qu'une coupe naphta, kérosène, gazole, distillat sous vide ou résidu. On entend par hydrotraitement des réactions englobant notamment l'hydrodésulfuration (HDS), l'hydrodéazotation (HDN) et l'hydrogénation des aromatiques (HDA). Il peut également être issu d'un hydrotraitement de biomasse ou de bio-huiles. De préférence, le catalyseur au moins partiellement usé est issu d'un procédé d'hydrodésulfuration d'une coupe essence oléfinique contenant du soufre effectué dans les conditions telles que décrites ci-dessous. Avantageusement, le catalyseur au moins partiellement usé ne subit pas de régénération, c'est-à-dire un traitement thermique sous un gaz contenant de l'air ou de l'oxygène à une température supérieure à 200°C permettant généralement de brûler la majorité du coke formé lors du procédé d'hydrotraitement dans lequel il a été utilisé auparavant. Il peut avoir subi une étape de déshuilage avant son utilisation dans le procédé d'hydrodésulfuration d'essences de la présente invention. L'étape de déshuilage comprend généralement la mise en contact du catalyseur au moins partiellement usé avec un courant de gaz inerte (c'est-à-dire essentiellement exempt d'oxygène), par exemple dans une atmosphère d'azote ou analogue, à une température comprise entre 300°C et 400°C, de préférence comprise entre 300°C et 350°C. Le débit de gaz inerte en termes de débit par unité de volume du catalyseur est de 5 à 150 NL.L$^{-1}$.h$^{-1}$ pendant 3 à 7 heures. En variante, l'étape de déshuilage peut être réalisée par des hydrocarbures légers, par traitement à la vapeur ou tout autre procédé analogue.

L'étape de déshuilage permet d'éliminer les hydrocarbures solubles et donc de libérer la porosité du catalyseur au moins partiellement usé nécessaire pour l'hydrodésulfuration.

Ce catalyseur au moins partiellement usé comprend ledit support d'oxyde, du soufre, la phase active comprenant au moins un métal du groupe VIB et au moins un métal du groupe VIII, éventuellement du phosphore, et ledit matériau graphitique contenant du carbone et de l'hydrogène sous forme de coke, ledit matériau graphitique ne contenant pas d'oxygène.

Les teneurs en métaux, en soufre, en carbone et en phosphore du catalyseur au moins partiellement usé sont celles indiquées ci-dessus. Elles sont déterminées selon les mêmes méthodes décrites ci-avant.

Optionnellement, le catalyseur au moins partiellement usé peut présenter en outre une faible teneur en contaminants issus de la charge traitée tels que le silicium, l'arsenic ou le chlore. De préférence, la teneur en silicium (outre celui éventuellement présent sur le catalyseur) est inférieure à 2% poids et de manière très préférée inférieure à 1 % poids par rapport au poids total du catalyseur au moins partiellement usé.

De préférence, la teneur en arsenic est inférieure à 2000 ppm poids et de manière très préférée inférieure à 500 ppm poids par rapport au poids total du catalyseur au moins partiellement usé.

De préférence, la teneur en chlore est inférieure à 2000 ppm poids et de manière très préférée inférieure à 500 ppm poids par rapport au poids total du catalyseur au moins partiellement usé.

**Exemples**

**Exemple 1 - Préparation d'un catalyseur A (selon l'invention)**

50 cm$^3$ d'un support d'alumine présentant une surface BET de 230 m$^2$/g, un volume poreux mesuré par porosimétrie au mercure de 0,78 ml/g et un diamètre moyen des pores de 11,5 nm défini comme le diamètre médian en volume par porosimétrie au mercure et qui se présente sous la forme « extrudé » est chargé dans un réacteur de type lit traversé. La carbonisation du support est réalisée avec une charge composée de 20 % poids de toluène, 5,9 % poids de diméthyldisulfure et 74,1 % poids d'hexane dans les conditions suivantes : T = 350°C, VVH = 4,5 h$^{-1}$, P$_{tot}$ = 60 bar (6 MPa), rapport volumique H$_2$/charge = 150 NL/L.

Le support carbonisé présente un volume de reprise en eau de 0,5 mL/g. On ajoute alors du cobalt, du molybdène et du phosphore. La solution d'imprégnation est préparée par dissolution à 90°C de l'oxyde de molybdène (2,2 g, MoO$_3$ >99,5%, Merck™), d'hydroxyde de cobalt (0,57 g, (Co(OH)$_2$ 95%, Merck™) et d'acide phosphorique à 85 % poids dans l'eau (0,46 g, Merck™) dans 4,7 mL d'eau distillée. Après imprégnation à sec de 10 grammes de support carbonisé, les extrudés sont laissés à maturer en atmosphère saturée en eau pendant 24 h à température ambiante, puis ils sont séchés à 90°C pendant 16 heures. Le catalyseur séché ainsi obtenu est noté A. La composition finale en métaux du catalyseur exprimée sous forme d'oxydes et rapportée au poids du catalyseur sec est alors la suivante : MoO$_3$ = 17,1 +/- 0,2 % poids, CoO = 3,4 +/- 0,1 % poids et P$_2$O$_5$ = 2,2 +/- 0,1 % poids. Le catalyseur présente 4,3% poids S rapporté au poids du catalyseur analysé par analyse CHNS selon l'ASTM D5373, et 10,7 % poids C rapporté au poids du catalyseur avec un rapport H/C = 1,05 analysé par analyse CHNS selon l'ASTM D5373 après prétraitement du catalyseur sous flux d'air sec à 300°C pendant 2 heures et un débit de 2 L/h/g.

**Exemple 2 - Préparation d'un catalyseur B (non conforme)**

50 cm$^3$ d'un même support que décrit dans l'exemple 1 est chargé dans un réacteur de type lit traversé. La carbonisation du support est réalisée avec une charge composée de 25 % poids de toluène, 5,9% poids de dimethyldisulfure et 69,1 % poids d'hexane dans les conditions suivantes : T = 400°C, VVH = 4,5 h$^{-1}$, P$_{tot}$ = 60 bar (6 MPa), rapport volumique H$_2$/charge = 150 NL/L.

Le support carbonisé présente un volume de reprise en eau de 0,51 mL/g. On ajoute alors du cobalt, du molybdène et du phosphore. La solution d'imprégnation est préparée par dissolution à 90°C de l'oxyde de molybdène (2,2 g), d'hydroxyde de cobalt (0,57 g), et d'acide phosphorique à 85 % poids dans l'eau (0,46 g) dans 4,8 mL d'eau distillée. Après imprégnation à sec de 10 grammes de support carbonisé, les extrudés sont laissés à maturer en atmosphère saturée en eau pendant 24 h à température ambiante, puis ils sont séchés à 90°C pendant 16 heures. Le catalyseur séché ainsi obtenu est noté B. La composition finale en métaux du catalyseur exprimée sous forme d'oxydes et rapportée au poids du catalyseur sec est alors la suivante : MoO$_3$ = 17,1 +/- 0,2 % poids, CoO = 3,4 +/-0,1 % poids et P$_2$O$_5$ = 2,2 +/- 0,1 % poids. Le catalyseur présente 4,2% poids S rapporté au poids du catalyseur analysé par analyse CHNS selon l'ASTM D5373, et 10,4 % poids C rapporté au poids du catalyseur avec un rapport H/C = 1,51 analysé par analyse CHNS selon l'ASTM D5373 après prétraitement du catalyseur sous flux d'air sec à 300°C pendant 2 heures et un débit de 2 L/h/g.

**Exemple 3 - Préparation d'un catalyseur C (non conforme)**

50 cm3 d'un même support que décrit dans l'exemple 1 est chargé dans un réacteur de type lit traversé. La carbonisation du support est réalisée avec une charge composée de 20 % poids de cyclohexène et 5,9 % poids de diméthyldisulfure et 74,1 % poids d'hexane dans les conditions suivantes : T = 350°C, VVH = 4,5 h$^{-1}$, Ptot = 60 bar (6 MPa), rapport volumique H2/charge = 150 NL/L.

Le support carbonisé présente un volume de reprise en eau de 0,77 mL/g. On ajoute alors du cobalt, du molybdène et du phosphore. La solution d'imprégnation est préparée par dissolution à 90°C de l'oxyde de molybdène (2,2 g), d'hydroxyde de cobalt (0,57 g), et d'acide phosphorique à 85 % poids dans l'eau (0,46 g) dans 7,3 mL d'eau distillée. Après imprégnation à sec de 10 grammes de support carbonisé, les extrudés sont laissés à maturer en atmosphère saturée en eau pendant 24 h à température ambiante, puis ils sont séchés à 90°C pendant 16 heures. Le catalyseur séché ainsi obtenu est noté C. La composition finale en métaux du catalyseur exprimée sous forme d'oxydes et rapportée au poids du catalyseur sec est alors la suivante : $MoO_3$ = 17,1 +/- 0,2 % poids, CoO = 3,4 +/-0,1 % poids et $P_2O_5$ = 2,2 +/- 0,1 % poids. Le catalyseur présente 0,9 % poids S rapporté au poids du catalyseur analysé par analyse CHNS selon l'ASTM D5373, et 1,4 % poids C rapporté au poids du catalyseur avec un rapport H/C = 1,12 analysé par analyse CHNS selon l'ASTM D5373 après prétraitement du catalyseur sous flux d'air sec à 300°C pendant 2 heures et un débit de 2 L/h/g.

## Exemple 4 - Préparation d'un catalyseur D (non conforme)

50 $cm^3$ d'un même support que décrit dans l'exemple 1 est chargé dans un réacteur de type lit traversé. La carbonisation du support est réalisée avec une charge composée de 40 % poids de toluène, 5,9% poids de dimethyldisulfure et 54,1 % poids d'hexane dans les conditions suivantes : T = 350°C, VVH = 6 $h^{-1}$, $P_{tot}$ = 60 bar (6 MPa), rapport volumique $H_2$/charge = 50 NL/L.

Le support carbonisé présente un volume de reprise en eau de 0,40 mL/g. On ajoute alors du cobalt, du molybdène et du phosphore. La solution d'imprégnation est préparée par dissolution à 90°C de l'oxyde de molybdène (2,2 g), d'hydroxyde de cobalt (0,57 g), et d'acide phosphorique à 85 % poids dans l'eau (0,46 g) dans 3,7 mL d'eau distillée. Après imprégnation à sec de 10 grammes de support carbonisé, les extrudés sont laissés à maturer en atmosphère saturée en eau pendant 24 h à température ambiante, puis ils sont séchés à 90°C pendant 16 heures. Le catalyseur séché ainsi obtenu est noté D. La composition finale en métaux du catalyseur exprimée sous forme d'oxydes et rapportée au poids du catalyseur sec est alors la suivante : $MoO_3$ = 17,1 +/- 0,2 % poids, CoO = 3,4 +/-0,1 % poids et $P_2O_5$ = 2,2 +/- 0,1 % poids. Le catalyseur présente 1,6% poids S rapporté au poids du catalyseur analysé par analyse CHNS selon l'ASTM D5373, et 20,9 % poids C rapporté au poids du catalyseur avec un rapport H/C = 1,03 analysé par analyse CHNS selon l'ASTM D5373 après prétraitement du catalyseur sous flux d'air sec à 300°C pendant 2 heures et un débit de 2 L/h/g.

## Exemple 5 - Préparation d'un catalyseur E (non conforme)

2 g de phénol et 15 g du même support que décrit dans l'exemple 1 sont mélangés à 50ml d'eau et 50ml d'éthanol dans un autoclave. Le système est fermé hermétiquement puis porté à 200°C avec une rampe de 8°C/min. La température est maintenue pendant 10 h et le solide est filtré. Après un lavage à l'eau distillée, le solide est séché dans une étuve à 100°C pendant 10 h puis est pyrolysé à 300°C pendant 1 h dans un four tubulaire en lit traversé sous flux d'azote de 10mL/min/g avec une rampe de température de 6°C/min. L'échantillon est ensuite récupéré et le processus est répété 5 fois consécutives pour obtenir un support mixte.

Le support carbonisé présente un volume de reprise en eau de 0,7 mL/g. On ajoute alors du cobalt, du molybdène et du phosphore. La solution d'imprégnation est préparée par dissolution à 90°C de l'oxyde de molybdène (2,2 g), d'hydroxyde de cobalt (0,57 g), et d'acide phosphorique à 85 % poids dans l'eau (0,46 g) dans 6,7 mL d'eau distillée. Après imprégnation à sec de 10 grammes de support carbonisé, les extrudés sont laissés à maturer en atmosphère saturée en eau pendant 24 h à température ambiante, puis ils sont séchés à 90°C pendant 16 heures. Le catalyseur séché ainsi obtenu est noté E. La composition finale en métaux du catalyseur exprimée sous forme d'oxydes et rapportée au poids du catalyseur sec est alors la suivante : $MoO_3$ = 17,1 +/- 0,2 % poids, CoO = 3,4 +/-0,1 % poids et $P_2O_5$ = 2,2 +/- 0,1 % poids. Le catalyseur présente 1,0% poids O rapporté au poids du catalyseur analysé par analyse CHNS selon l'ASTM D5373, et 10,5 % poids C rapporté au poids du catalyseur avec un rapport H/C = 1,06 analysé par analyse CHNS selon l'ASTM D5373 après prétraitement du catalyseur sous flux d'air sec à 300°C pendant 2 heures et un débit de 2 L/h/g.

## Exemple 6 - Evaluation des performances catalytiques des catalyseurs A, B, C, D et E

Une charge modèle représentative d'une essence de craquage catalytique contenant 10% poids de 2,3-diméthylbut-2-ène et 0,33% poids de 3-méthylthiophène (soit 1000 ppm pds de soufre dans la charge) est utilisée pour l'évaluation des performances catalytiques des différents catalyseurs. Le solvant utilisé est l'heptane.

La réaction d'hydrodésulfuration (HDS) est opérée dans un réacteur à lit fixe traversé sous une pression totale de 1,5 MPa, à 210°C, à VVH = 6 $h^{-1}$ (WH = débit volumique de charge/volume de catalyseur), et un rapport volumique $H_2$/charge de 300 NL/L, en présence de 4 mL de catalyseur. Au préalable à la réaction d'HDS, le catalyseur est sulfuré insitu à 350°C pendant 2 heures sous un flux d'hydrogène contenant 15% mol d'$H_2$S à pression atmosphérique.

Chacun des catalyseurs est placé successivement dans ledit réacteur. Des échantillons sont prélevés à différents intervalles de temps et sont analysés par chromatographie en phase gazeuse de façon à observer la disparition des réactifs et la formation des produits.

Les performances catalytiques des catalyseurs sont évaluées en termes d'activité catalytique et de la sélectivité. L'activité en hydrodésulfuration (HDS) est exprimée à partir de la constante de vitesse pour la réaction d'HDS du 3-méthylthiophène (kHDS), normalisée par le volume de catalyseur introduit et en supposant une cinétique d'ordre 1 par rapport au composé soufré. L'activité en hydrogénation des oléfines (HydO) est exprimée à partir de la constante de vitesse de la réaction d'hydrogénation du 2,3-diméthylbut-2-ène, normalisée par le volume de catalyseur introduit et en supposant une cinétique d'ordre 1 par rapport à l'oléfine.

La sélectivité du catalyseur est exprimée par le rapport normalisé des constantes de vitesse kHDS/kHydO. Le rapport kHDS/kHydO sera d'autant plus élevé que le catalyseur sera plus sélectif. Les valeurs obtenues sont normalisées en prenant le catalyseur A comme référence (activité HDS relative et sélectivité relative égale à 100). Les performances sont donc l'activité HDS relative et la sélectivité relative.

Table 1

| Catalyseurs | Activité HDS relative | Sélectivité relative |
|---|---|---|
| A (selon l'invention) | 100 | 100 |
| B (comparatif) | 99 | 82 |
| C (comparatif) | 110 | 60 |
| D (comparatif) | 75 | 101 |
| E (comparatif) | 88 | 99 |

Parmi les quatre catalyseurs B, C, D et E et en prenant le catalyseur A comme référence, seul le catalyseur A préparé selon l'invention présente à la fois une activité maintenue en hydrodésulfuration et une sélectivité augmentée en hydrogénation des oléfines.

Cette amélioration de sélectivité des catalyseurs est particulièrement intéressante dans le cas d'une mise en œuvre dans un procédé d'hydrodésulfuration d'essence contenant des oléfines pour lequel on cherche à limiter autant que possible la perte d'octane due à l'hydrogénation des oléfines.

**Revendications**

1. Procédé d'hydrodésulfuration d'une coupe essence contenant des composés soufrés et des oléfines dans lequel on met en contact ladite coupe essence, de l'hydrogène et un catalyseur, ledit procédé étant effectué à une température comprise entre 200 et 400° C, une pression totale comprise entre 1 et 3 MPa, une vitesse volumique horaire, définie comme étant le débit volumique de charge rapporté au volume de catalyseur, comprise entre 1 et 10 h$^{-1}$, et un rapport volumique hydrogène/charge essence compris entre 100 et 1200 NL/L, ledit catalyseur comprend un support d'oxyde, du soufre et une phase active comprenant au moins un métal du groupe VIB et au moins un métal du groupe VIII, ledit catalyseur contenant entre outre un matériau graphitique contenant du carbone et de l'hydrogène, la teneur en carbone, exprimée en élément carbone, étant comprise entre 5 et 20 % poids par rapport au poids du catalyseur et le rapport atomique H/C est compris entre 0,8 et 1,2, ledit matériau graphitique ne contenant pas d'oxygène.

2. Procédé selon la revendication précédente, dans lequel la teneur en carbone exprimée en élément carbone est comprise entre 10 et 15 % poids par rapport au poids du catalyseur.

3. Procédé selon l'une des revendications précédentes, dans lequel la teneur en soufre exprimée en élément soufre est comprise entre 1 et 8% poids par rapport au poids du catalyseur.

4. Procédé selon l'une des revendications précédentes, dans lequel le catalyseur a une teneur en métal du groupe VIB comprise entre 5 et 40 % poids, exprimée en oxyde de métal du groupe VIB, par rapport au poids total du catalyseur et une teneur en métal du groupe VIII comprise entre 1 et 10 % poids, exprimée en oxyde de métal du groupe VIII, par rapport au poids total du catalyseur.

5. Procédé selon l'une des revendications précédentes, dans lequel le rapport molaire métal du groupe VIII sur métal du groupe VIB dans le catalyseur est compris entre 0,1 et 0,8.

**6.** Procédé selon l'une des revendications précédentes, dans lequel la surface spécifique du catalyseur est comprise entre 20 et 200 m$^2$/g.

**7.** Procédé selon l'une des revendications précédentes, dans lequel le catalyseur comprend en outre du phosphore à une teneur comprise entre 0,1 et 20 % poids exprimée en P$_2$O$_5$ par rapport au poids total du catalyseur.

**8.** Procédé selon l'une des revendications précédentes, dans lequel le catalyseur comprend en outre un composé organique contenant de l'oxygène et/ou de l'azote et/ou du soufre.

**9.** Procédé selon la revendication précédente, dans lequel le composé organique est choisi parmi un composé comportant une ou plusieurs fonctions chimiques choisies parmi une fonction carboxylique, alcool, thiol, thioéther, sulfone, sulfoxyde, éther, aldéhyde, cétone, ester, carbonate, amine, nitrile, imide, oxime, urée, amide, ou un composé incluant un cycle furanique ou encore un sucre.

**10.** Procédé selon la revendication 9, dans lequel le composé organique est choisi parmi la $\gamma$-valérolactone, la 2-acétylbutyrolactone, le triéthylèneglycol, le diéthylèneglycol, l'éthylèneglycol, l'acide éthylènediaminetétra-acétique (EDTA), l'acide maléique, l'acide malonique, l'acide citrique, l'acide acétique, l'acide oxalique, l'acide gluconique, le glucose, le fructose, le saccharose, le sorbitol, le xylitol, l'acide y-cétovalérique, un succinate de dialkyle C1-C4 et plus particulièrement le succinate de diméthyle, le diméthylformamide, la 1-méthyl-2-pyrrolidinone, le carbonate de propylène, le 3-oxobutanoate de 2-méthoxyéthyle, la bicine, la tricine, le 2-furaldéhyde (aussi connu sous le nom furfural), le 5-hydroxyméthylfurfural, le 2-acétylfurane, le 5-méthyl-2-furaldéhyde, l'acide ascorbique, le lactate de butyle, le lactate d'éthyle, le butyryllactate de butyle, le 3-hydroxybutanoate d'éthyle, le 3-éthoxypropanoate d'éthyle, l'acétate de 2-éthoxyéthyle, l'acétate de 2-butoxyéthyle, l'acrylate de 2-hydroxyéthyle, la 1-vinyl-2-pyrrolidinone, la 1,3-diméthyl-2-imidazolidinone, le 1,5-pentanediol, la 1-(2-hydroxyéthyl)-2-pyrrolidinone, la 1-(2-hydroxyéthyl)-2,5-pyrrolidinedione, la 5-méthyl-2(3H)-furanone, la 1-méthyl-2-pipéridinone, l'acide 4-aminobutanoïque, le glycolate de butyle, le 2-mercaptopropanoate d'éthyle, le 4-oxopentanoate d'éthyle, le maléate de diéthyle, le maléate de diméthyle, le fumarate de diméthyle, le fumarate de diéthyle, l'adipate de diméthyle et le 3-oxoglutarate de diméthyle.

**11.** Procédé selon l'une des revendications précédentes, dans lequel la phase active du catalyseur est constituée de cobalt et de molybdène.

**12.** Procédé selon l'une des revendications 1 à 11, dans lequel le catalyseur est un catalyseur au moins partiellement usé issu d'un procédé hydrotraitement.

**13.** Procédé selon l'une des revendications précédentes, dans lequel l'essence est une essence de craquage catalytique.

**Patentansprüche**

**1.** Verfahren zur Hydrodesulfurierung eines Benzinschnitts, der Schwefelverbindungen und Olefine enthält, bei dem man den Benzinschnitt, Wasserstoff und einen Katalysator in Kontakt bringt, wobei das Verfahren bei einer Temperatur zwischen 200 und 400 °C, einem Gesamtdruck zwischen 1 und 3 MPa, einer Katalysatorbelastung, die als Volumenstrom des Einsatzstoffs bezogen auf das Katalysatorvolumen definiert ist, zwischen 1 und 10 h$^{-1}$ und einem Wasserstoff/Benzin-Volumenverhältnis zwischen 100 und 1200 Nl/l durchgeführt wird, der Katalysator einen Oxidträger, Schwefel und eine aktive Phase, die mindestens ein Metall der Gruppe VIB und mindestens ein Metall der Gruppe VIII umfasst, umfasst, wobei der Katalysator außerdem ein Graphitmaterial enthält, das Kohlenstoff und Wasserstoff enthält, wobei der Kohlenstoffgehalt, ausgedrückt als Kohlenstoffelement, zwischen 5 und 20 Gew.-%, bezogen auf das Gewicht des Katalysators, liegt und das H/C-Atomverhältnis zwischen 0,8 und 1,2 liegt, wobei das Graphitmaterial keinen Sauerstoff enthält.

**2.** Verfahren nach dem vorhergehenden Anspruch, wobei der Kohlenstoffgehalt, ausgedrückt als Kohlenstoffelement, zwischen 10 und 15 Gew.-%, bezogen auf das Gewicht des Katalysators, liegt.

**3.** Verfahren nach einem der vorhergehenden Ansprüche, wobei der Schwefelgehalt, ausgedrückt als Schwefelelement, zwischen 1 und 8 Gew.-%, bezogen auf das Gewicht des Katalysators, liegt.

**4.** Verfahren nach einem der vorhergehenden Ansprüche, wobei der Katalysator einen Gehalt an Metall der Gruppe VIB zwischen 5 und 40 Gew.-%, ausgedrückt als Oxid von Metall der Gruppe VIB, bezogen auf das Gesamtgewicht des Katalysators, und einen Gehalt an Metall der Gruppe VIII zwischen 1 und 10 Gew.-%, ausgedrückt als Oxid von Metall der Gruppe VIII, bezogen auf das Gesamtgewicht des Katalysators, aufweist.

5. Verfahren nach einem der vorhergehenden Ansprüche, wobei das Molverhältnis von Metall der Gruppe VIII zu Metall der Gruppe VIB in dem Katalysator zwischen 0,1 und 0,8 liegt.

6. Verfahren nach einem der vorangehenden Ansprüche, wobei die spezifische Oberfläche des Katalysators zwischen 20 und 200 m$^2$/g liegt.

7. Verfahren nach einem der vorhergehenden Ansprüche, wobei der Katalysator außerdem Phosphor in einem Gehalt zwischen 0,1 und 20 Gew.-%, ausgedrückt als $P_2O_5$, bezogen auf das Gesamtgewicht des Katalysators, umfasst.

8. Verfahren nach einem der vorhergehenden Ansprüche, wobei der Katalysator außerdem eine Sauerstoff und/oder Stickstoff und/oder Schwefel enthaltende organische Verbindung umfasst.

9. Verfahren nach dem vorhergehenden Anspruch, wobei die organische Verbindung ausgewählt wird aus einer Verbindung mit einer oder mehreren chemischen Funktionen, die aus einer Carboxyl-, Alkohol-, Thiol-, Thioether-, Sulfon-, Sulfoxid-, Ether-, Aldehyd-, Keton-, Ester-, Carbonat-, Amin-, Nitril-, Imid-, Oxim-, Harnstoff- und Amidfunktion oder einer Verbindung, die einen Furanring enthält, oder auch einem Zucker ausgewählt wird/werden.

10. Verfahren nach Anspruch 9, wobei die organische Verbindung aus γ-Valerolacton, 2-Acetylbutyrolacton, Triethylenglykol, Diethylenglykol, Ethylenglykol, Ethylendiamintetraessigsäure (EDTA), Maleinsäure, Malonsäure, Citronensäure, Essigsäure, Oxalsäure, Gluconsäure, Glucose, Fructose, Saccharose, Sorbitol, Xylitol, γ-Ketovaleriansäure, einem Bernsteinsäuredi-C1-C4-alkylester und spezieller Bernsteinsäuredimethylester, Dimethylformamid, 1-Methyl-2-pyrrolidinon, Propylencarbonat, 3-Oxobutansäure-2-methoxyethylester, Bicin, Tricin, 2-Furaldehyd (auch unter dem Namen Furfural bekannt), 5-Hydroxymethylfurfural, 2-Acetylfuran, 5-Methyl-2-furaldehyd, Ascorbinsäure, Butyllactat, Ethyllactat, Butylbutyryllactat, 3-Hydroxybutansäureethylester, 3-Ethoxypropansäureethylester, Essigsäure-2-ethoxyethylester, Essigsäure-2-butoxyethylester, 2-Hydroxyethylacrylat, 1-Vinyl-2-pyrrolidinon, 1,3-Dimethyl-2-imidazolidinon, 1,5-Pentandiol, 1-(2-Hydroxyethyl)-2-pyrrolidinon, 1-(2-Hydroxyethyl)-2,5-pyrrolidindion, 5-Methyl-2(3H)-furanon, 1-Methyl-2-piperidinon, 4-Aminobutansäure, Butylglycolat, 2-Mercaptopropansäureethylester, 4-Oxopentansäureethylester, Maleinsäurediethylester, Maleinsäuredimethylester, Fumarsäuredimethylester, Fumarsäurediethylester, Adipinsäuredimethylester und 3-Oxoglutarsäuredimethylester ausgewählt wird.

11. Verfahren nach einem der vorhergehenden Ansprüche, bei dem die aktive Phase des Katalysators aus Cobalt und Molybdän besteht.

12. Verfahren nach einem der Ansprüche 1 bis 11, wobei es sich bei dem Katalysator um einen zumindest teilweise verbrauchten Katalysator handelt, der aus einem Hydrierbehandlungsverfahren stammt.

13. Verfahren nach einem der vorhergehenden Ansprüche, wobei es sich bei dem Benzin um ein durch katalytisches Cracken erhaltenes Benzin handelt.

**Claims**

1. Process for the hydrodesulfurization of a gasoline cut containing sulfur-comprising compounds and olefins, in which said gasoline cut, hydrogen and a catalyst are brought into contact, said process being carried out at a temperature of between 200°C and 400°C, a total pressure of between 1 and 3 MPa, an hourly space velocity, defined as being the flow rate by volume of feedstock relative to the volume of catalyst, of between 1 and 10 h$^{-1}$ and a hydrogen/gasoline feedstock ratio by volume of between 100 and 1200 Sl/l, said catalyst comprising an oxide support, sulfur and an active phase comprising at least one metal from group VIb and at least one metal from group VIII, said catalyst additionally containing a graphitic material containing carbon and hydrogen, the carbon content, expressed as carbon element, being between 5% and 20% by weight, with respect to the weight of the catalyst, and the H/C atomic ratio being between 0.8 and 1.2, said graphitic material not containing oxygen.

2. Process according to the preceding claim, in which the carbon content, expressed as carbon element, is between 10% and 15% by weight, with respect to the weight of the catalyst.

3. Process according to either of the preceding claims, in which the sulfur content, expressed as sulfur element, is between 1% and 8% by weight, with respect to the weight of the catalyst.

4. Process according to one of the preceding claims, in which the catalyst has a content of metal from group VIb of between 5% and 40% by weight, expressed as oxide of metal from group VIb, with respect to the total weight of the catalyst, and a content of metal from group VIII of between 1% and 10% by weight, expressed as oxide of metal from group VIII, with respect to the total weight of the catalyst.

5. Process according to one of the preceding claims, in which the metal from group VIII to metal from group VIb molar ratio in the catalyst is between 0.1 and 0.8.

6. Process according to one of the preceding claims, in which the specific surface of the catalyst is between 20 and 200 $m^2/g$.

7. Process according to one of the preceding claims, in which the catalyst additionally comprises phosphorus at a content of between 0.1% and 20% by weight, expressed as $P_2O_5$, with respect to the total weight of the catalyst.

8. Process according to one of the preceding claims, in which the catalyst additionally comprises an organic compound containing oxygen and/or nitrogen and/or sulfur.

9. Process according to the preceding claim, in which the organic compound is chosen from a compound comprising one or more chemical functional groups chosen from a carboxyl, alcohol, thiol, thioether, sulfone, sulfoxide, ether, aldehyde, ketone, ester, carbonate, amine, nitrile, imide, oxime, urea or amide functional group or a compound including a furan ring or also a sugar.

10. Process according to Claim 9, in which the organic compound is chosen from γ-valerolactone, 2-acetylbutyrolactone, triethylene glycol, diethylene glycol, ethylene glycol, ethylenediaminetetraacetic acid (EDTA), maleic acid, malonic acid, citric acid, acetic acid, oxalic acid, gluconic acid, glucose, fructose, sucrose, sorbitol, xylitol, γ-ketovaleric acid, a di(C1-C4 alkyl) succinate and more particularly dimethyl succinate, dimethylformamide, 1-methyl-2-pyrrolidinone, propylene carbonate, 2-methoxyethyl 3-oxobutanoate, bicine, tricine, 2-furaldehyde (also known under the name furfural), 5-hydroxymethylfurfural, 2-acetylfuran, 5-methyl-2-furaldehyde, ascorbic acid, butyl lactate, ethyl lactate, butyl butyryllactate, ethyl 3-hydroxybutanoate, ethyl 3-ethoxypropanoate, 2-ethoxyethyl acetate, 2-butoxyethyl acetate, 2-hydroxyethyl acrylate, 1-vinyl-2-pyrrolidinone, 1,3-dimethyl-2-imidazolidinone, 1,5-pentanediol, 1-(2-hydroxyethyl)-2-pyrrolidinone, 1-(2-hydroxyethyl)-2,5-pyrrolidinedione, 5-methyl-2(3H)-furanone, 1-methyl-2-piperidinone, 4-aminobutanoic acid, butyl glycolate, ethyl 2-mercaptopropanoate, ethyl 4-oxopentanoate, diethyl maleate, dimethyl maleate, dimethyl fumarate, diethyl fumarate, dimethyl adipate and dimethyl 3-oxoglutarate.

11. Process according to one of the preceding claims, in which the active phase of the catalyst is constituted by cobalt and molybdenum.

12. Process according to one of Claims 1 to 11, in which the catalyst is an at least partially spent catalyst resulting from a hydrotreating process.

13. Process according to one of the preceding claims, in which the gasoline is a catalytic cracking gasoline.

**EP 4 251 712 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1077247 A
- EP 1174485 A
- US 5985136 A
- US 4140626 A
- US 4774220 A
- US 8637423 B
- EP 1892039 A
- US 2793170 A
- FR 2850299
- EP 0745660 A
- US 20090258780 A

**Littérature non-brevet citée dans la description**

- **D.R. LIDE**. CRC Handbook of Chemistry and Physics. 2000
- *The Journal of American Society*, 1938, vol. 60, 309
- **JEAN CHARPIN** ; **BERNARD RASNEUR**. *Techniques de l'ingénieur, traité analyse et caractérisation*, 1050-1055